# EUROPÄISCHE PATENTSCHRIFT

(11) **EP 1 645 545 B1**
(45) Veröffentlichungstag und Bekanntmachung des Hinweises auf die Patenterteilung: **25.06.2014**
(21) Anmeldenummer: 05021496.4
(22) Anmeldetag: 30.09.2005
(51) Int. Cl.: C03B 11/08

(54) **Verfahren zur Herstellung von Glaslinsen und Werkzeug zum Blankpressen**
Process for making lenses and tool for pressing a glass blank
Procédé de fabrication de lentilles et outil de pressage d'une paraison de verre

(30) Priorität: 06.10.2004 DE 102004048500
(43) Veröffentlichungstag der Anmeldung: 12.04.2006
(73) Patentinhaber: Docter Optics GmbH, 07806 Neustadt an der Orla (DE)
(72) Erfinder: Bonitz, Ralf Dr., 55271 Stadecken-Elsheim (DE); Adebahr, Rainer, 31073 Grünenplan (DE); Peters, Frank, 31073 Delligsen (DE)
(74) Vertreter: Kiriczi, Sven Bernhard

(56) Entgegenhaltungen:
- DE-A1- 10 216 706
- DE-B- 1 142 992
- FR-A- 2 415 607
- US-A- 2 398 676
- PATENT ABSTRACTS OF JAPAN Bd. 1997, Nr. 12, 25. Dezember 1997 (1997-12-25) & JP 09 208240 A (AZUMA GOSEI KK), 12. August 1997 (1997-08-12)

## Beschreibung

Die Erfindung betrifft ein Verfahren zur Herstellung von Linsen/ für Kfz-Scheinwerfer, gemäß dem Patentanspruchs 1. Die Erfindung bezieht sich auch auf ein Werkzeug zum Blankpressen.

Manche Linsen, insbesondere solche für Kfz-Scheinwerfer, müssen nicht die hohen Anforderungen erfüllen, wie dies bei optischen Linsen in Objektiven der Fall ist. Andererseits dürfen die Abmessungen, die für den Einbau in den Scheinwerfer zu beachten sind, keinen Schwankungen unterliegen und darüber hinaus müssen die Linsen in der Herstellung preiswert sein.

Herkömmlich werden solche Linsen durch ein einseitiges Blankpressverfahren hergestellt, d.h. ein Halbzeug wird erwärmt, die asphärische Seite durch Pressen erzeugt und die Planseite durch Schleifen und Polieren nachgearbeitet. Die Technik für die Herstellung von einseitig blankgepressten optischen Komponenten für die Kfz-Hauptscheinwerfer ist ausgereift, aber für eine hohe Produktivität bei hohen Stückzahlen nicht geeignet. Diese Produktionstechnologie ist in eine Vielzahl von Fertigungsschritten gegliedert, die sich gemäß dem Ablauf bei der Herstellung folgendermaßen darstellen:
A. Gemengebereitstellung
B. Schmelze
C. Heißformgebung
D. Temperkühlung der Halbzeuge
E. Qualitätskontrolle
F. Verpackung und weitere Lieferung zum Endbearbeiter
   1. Wiedererwärmung
   2. Pressen (einseitig auf Endkontur)
   3. Temperkühlung
   4. Schleifen (zweite Seite plan)
   5. Polieren (zweite Seite plan)
   6. Facettieren (Rand wegen Ausbrüchen)
   7. Reinigen
   8. Qualitätskontrolle
   9. Verpackung

Es hat sich gezeigt, dass der Speiser keine exakt konstanten Tropfengewichte liefert. Die Schwankungen liegen bei Tropfengewichten von 100 - 200 g in der Größenordnung von bis zu ± 2%. Während des Pressvorgangs ergibt sich noch ein Volumenschrumpf. Diese Schwankungen dürfen nicht die Einbaumaße der Linse beeinträchtigen.

Aus der DE 100 43 065 A1 ist ein Verfahren zum Blankpressen von optischen Bauteilen bekannt, bei dem überschüssiges Material in einen nicht begrenzten Freiraum ausweichen kann, der zwischen dem unteren und dem oberen Formteil vorhanden ist. Am Glasteil entsteht ein konzentrischer Ring, der sich nicht auf die optischen Kenngrößen des blankgepressten Glasteiles auswirkt. Unterschiede im Volumen des portionierten Glasteiles können problemlos durch eine unterschiedliche Breite des Randes ausgeglichen bzw. kompensiert werden. Die Breite des Randes des blankgepressten Glasteiles, hat im Gegensatz zur Dicke des Randes keinerlei optische Funktion. Dieser Rand steht nicht gegenüber der planen Linsenfläche vor. Ein ganz ähnliches Verfahren, bei dem jedoch eine Linse mit zwei gekrümmten Linsenflächen erzeugt wird, ist in US 4,698,089 A beschrieben.

Aus FR-A-2 415 607 ist die Herstellung einer schüsselartigen Scheinwerferabdeckhaube bekannt, mit der ein Reflektor in herkömmlicher Weise vor Verschmutzung geschützt wird. Eine Scheinwerferabdeckhaube ist keine Linse und erst recht kein Präzisionsbauteil. Solche Abdeckhauben und ihre Herstellung, die ähnlich der von Auflaufschalen erfolgt, können ein Verfahren zum Blankpressen von optischen Präzisionsbauteilen wie Linsen nicht nahe legen. Aus der JP-A-09-208240 ist ebenfalls die Herstellung einer einklipsbaren Scheinwerferabdeckhaube bekannt. Auch dieses Verfahren lässt die Herstellung von optischen Präzisionsbauteilen nicht zu.

Es ist daher Aufgabe der Erfindung, ein Verfahren zur Herstellung von Linsen für Kfz-Scheinwerfer anzugeben, das preiswert ist und konstante Einbaumaße gewährleistet.

Diese Aufgabe wird mit einem Verfahren zur Herstellung von Linsen mit einer ersten konvexen Linsenfläche und einer zweiten Linsenfläche gelöst, bei dem ein Schmelzetropfen mit einer Anfangsviskosität von 10⁴ bis 10⁶ dPas in eine konkave Form eingebracht wird, die aus einem Unterteil und einem Obersteil besteht und zusammen mit einem Stempel, der in vertikaler Richtung beweglich ist und das Oberteil führt, ein beidseitiges Blankpressen durchgeführt wird, wobei der Stempel in den Schmelzetropfen eintaucht und mittels des hierbei verdrängten Glasmaterials ein über den höchsten Punkt der zweiten Linsenfläche vorstehender Auflagerand mit vorgegebenen Abmessungen angeformt wird.

Eine Linse mit einem über den höchsten Punkt der zweiten Linse vorstehenden Auflagerand ist bereits aus DE 102 16 706 A1 bekannt, jedoch sind dieser Schrift keine Einzelheiten zum Herstellungsverfahren zu entnehmen.

Die zweite Linsenfläche kann konvex, konkav oder plan sein. Unter dem höchsten Punkt der zweiten Linsenfläche wird bei einer konvexen Linsenfläche der Scheitelpunkt und bei einer konkaven Linsenfläche der Rand der Linsenfläche verstanden. Bei einer planen zweiten Linsenfläche bezieht sich der Überstand des Auflagerandes auf die plane Fläche. Hierbei kommt es darauf an, dass die zweite Linsenfläche beim Ablegen auf dem Auflagerand keinen Kontakt mit der Unterlage hat. Entsprechend der herzustellenden Kontur der zweiten Linsenfläche ist der Stempel ausgebildet, der somit eine plane, eine konvexe oder eine konkave Stempelfläche aufweisen kann.

Die Einbaumaße werden durch die Abmessungen des Auflagerandes R_{H} = Randhöhe, R_{B} = Randbreite sowie durch die Gesamthöhe H_{G} der Linse definiert, wobei die Gesamthöhe H_{G} die Höhe der Linse von der Auflagefläche des Auflagerands bis zum Scheitelpunkt der ersten konvexen Linsenfläche bezeichnet.

Der Auflagerand sollte mindestens um H > 0,2 mm gegenüber dem höchsten Punkt der zweiten Linsenfläche vorstehen. Dieses Maß ist erforderlich, damit die Linse, die aus der Schmelze beidseitig blankgepresst wird, anschließend auf einem Kühlband abgelegt werden kann, ohne dass während dieser Temperkühlung die zweite Linsenfläche beschädigt wird.

Das Verfahren hat den Vorteil, dass die Einbauabmessungen durch Materialmengenschwankungen nicht beeinflusst werden. Da der Stempel in die Schmelze eintaucht, wird die Glasschmelze auch in radialer Richtung verdrängt und in einen für die Ausbildung des Auflagerandes vorgesehenen Formhohlraum der im übrigen konkaven Form gedrückt. Hierbei wird bei Mengenschwankungen unter Beibehaltung der Gesamthöhe H_{G} der Linse lediglich der Abstand zwischen der asphärischen Oberfläche und der zweiten Linsenoberfläche verändert, während die Abmessungen des Linsenrandes beibehalten werden können, weil das verdrängte Glasmaterial immer in denselben hierfür vorgesehenen Formhohlraum eingepresst wird.

Dies bedeutet, dass die Mengenschwankungen lediglich zu Lasten des optischen Abschnittes der Linse gehen, was insofern hingenommen werden kann, als diese Linsen für Kfz-Projektionsscheinwerfer hinsichtlicht ihrer Abbildungseigenschaften nicht die Anforderungen optischer Linsen in Objektiven erfüllen müssen.

Das Verfahren hat den weiteren Vorteil, dass kein Halbzeug hergestellt werden muss, das anschließend blankgepresst werden muss. Hierzu wäre es nämlich erforderlich, das Halbzeug nochmals aufzuheizen.

Durch das neue Herstellungsverfahren zum beidseitigen Blankpressen gelingt es, die Prozessschritte auf ein Minimum zu reduzieren und damit Kosten einzusparen:
1. Einspeisen
2. Heißformgebung (beidseitig Blankpressen)
3. Temperkühlung
4. Qualitätsprüfung und Verpackung.

Das an sich als teuer anzusehende beidseitige Blankpressen wird zu einem kostengünstigen und schnellen Verfahren zur Herstellung von Massenartikeln, wenn aus der Schmelze direkt blankgepresst wird. Dazu ist zwar ein Auflagerand und ein Abkühlprozeß erforderlich, was aber insofern keinen Nachteil darstellt, als dieser Auflagerand auch zur Festlegung der Einbaumaße genutzt werden kann und beim Herstellverfahren keinen Änderungen in Folge von Mengenschwankungen unterliegt.

Das beidseitige Blankpressen wird bei einer Anfangs-Viskosität der Glasschmelze von 10⁴ dPas bis 10⁶ dPas durchgeführt. Unter Anfangs-Viskosität wird diejenige Viskosität verstanden, die die Glasschmelze zu Beginn des Blankpressvorgangs, also vor dem Eintauchen des Stempels, besitzt.

Vorzugsweise werden Linsen mit einem Durchmesser von 50 - 80 mm beidseitig blankgepresst.

Das Werkzeug zum Blankpressen von Linsen für Kfz-Scheinwerfer, besitzt ein Unterteil, das eine konkave Mulde aufweist, die in eine horizontale Schulter und einen vertikalen Umfangsrand übergeht. Das Oberteil des Werkzeuges liegt auf der Stirnseite des Unterteils, wird durch den Stempel geführt auf und steht nach innen im Bereich der horizontalen Schulter über. Ferner weist das Werkzeug einen Stempel auf. Durch die Schulter und das Oberteil wird die Höhe des auszubildenden Auflagerandes der Linse definiert.

Ein dreiteiliges Werkzeug mit einem Unterteil, einem Oberteil und einem Stempel ist aus JP 60-09231 A (Abstract) bekannt, allerdings ist der mit dem Glas in Kontakt kommende Teil der Oberfläche nicht mit einer Schulter und einem vertikalen Umfangsrand versehen.

Der Stempel ist bei dem erfindungsgemäßen Werkzeug vorzugsweise ortsfest angeordnet, wobei das Unterteil in vertikaler Richtung bewegbar ist. Das Oberteil ist in vertikaler Richtung beweglich angeordnet und der Stempel führt das Oberteil, was bedeutet, dass der Innendurchmesser des Oberteils auf den Außendurchmesser des Stempels abgestimmt ist. Die Anordnung hat den Vorteil, dass die optischen Eigenschaften der herzustellenden Linse gewährleistet werden können, weil ein Verkippen der optischen Achsen der beiden Linsenflächen vermieden werden kann.

Vorzugsweise ist der Durchmesser des Stempels kleiner gleich dem Durchmesser der Mulde. Über die Abmessungen der Durchmesser von Oberteil und Stempel lässt sich die Breite des Auflagerandes einstellen.

Vorzugsweise weist der Stempel eine plane Unterseite auf.

Eine beispielhafte Ausführungsform der Erfindung wird nachfolgend anhand der Zeichnungen näher erläutert.

Es zeigen:
- Fig. 1: das Herstellverfahren einer Linse in einem Blankpresswerkzeug
- Fig. 2a, 2b: zwei Linsen für einen Kfz-Scheinwerfer.

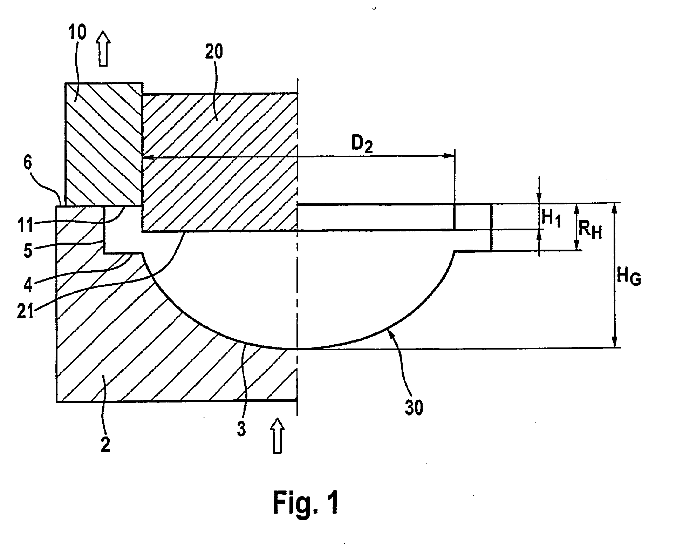

In der Fig. 1 ist die linke Hälfte eines Blankpresswerkzeugs 1 im Schnitt dargestellt, das aus einem Unterteil 2, einem Oberteil 10 und einem Stempel 20 mit dem Durchmesser D2 besteht. Mit diesem Blankpresswerkzeug 1 wird eine plankonvexe Linse 30 hergestellt, die beispielsweise für Kfz-Projektionsscheinwerfer verwendet werden kann.

Das Unterteil 2 weist eine asphärische Mulde 3 auf, die in eine horizontale Schulter 4 und einen vertikalen Umfangsrand 5 übergeht. Das Oberteil 10 wird durch einen Formring gebildet, der auf der Stirnfläche 6 des Unterteils 2 aufliegt und radial nach innen im Bereich der horizontalen Schulter 4 übersteht. Der Abstand zwischen der Schulter 4 und der Unterseite des Formrings definiert die Höhe R_{H} des auszubildenden Auflagerandes 34 der Linse 30.

Um die optischen Eigenschaften der Linse 30 zu gewährleisten und eine Verkippung der optischen Achsen von Oberseite/Unterseite der Linsen zu vermeiden, ist der Stempel ortsfest mit der Maschine verbunden. Das Oberteil 10 ist mittels einer federnden Aufhängung an den Stempelaußenseiten an der Maschine befestigt. Nach dem Einfüllen des Glastropfens wird das Unterteil 2 verkippungsfrei gegen den Stempel 20 hochgefahren bis das Oberteil 10, welches zunächst in Bezug zur Stempelunterseite vorsteht, auf dem Unterteil 2 zur Auflage kommt. Beim weiterem Hochfahren des Unterteils 2 wird das Oberteil 10 gegen die federnde Aufhängung in der Stempelführung hochgeschoben, wobei der Stempel 20 in das Glas eintaucht.

Durch das Eintauchen der planen Unterseite 21 in den Glastropfen wird die Glasschmelze in den Zwischenraum zwischen Schulter 4 und Unterseite 11 des Oberteils 10 verdrängt. Das Volumen des Glastropfens ist größer als das der Mulde 3. Bei Materialmengenschwankungen taucht der Stempel 20 mehr oder weniger tief in die Glasschmelze ein, so dass lediglich der Abstand zwischen der planen Linsenfläche 33 und der asphärischen Linsenfläche 33 verändert wird, nicht jedoch die Abmessungen des Auflagerandes 34 , da die Unterseite 11 des Formrings und die Schulter 4 unabhängig von der Materialmenge immer denselben Abstand aufweisen.

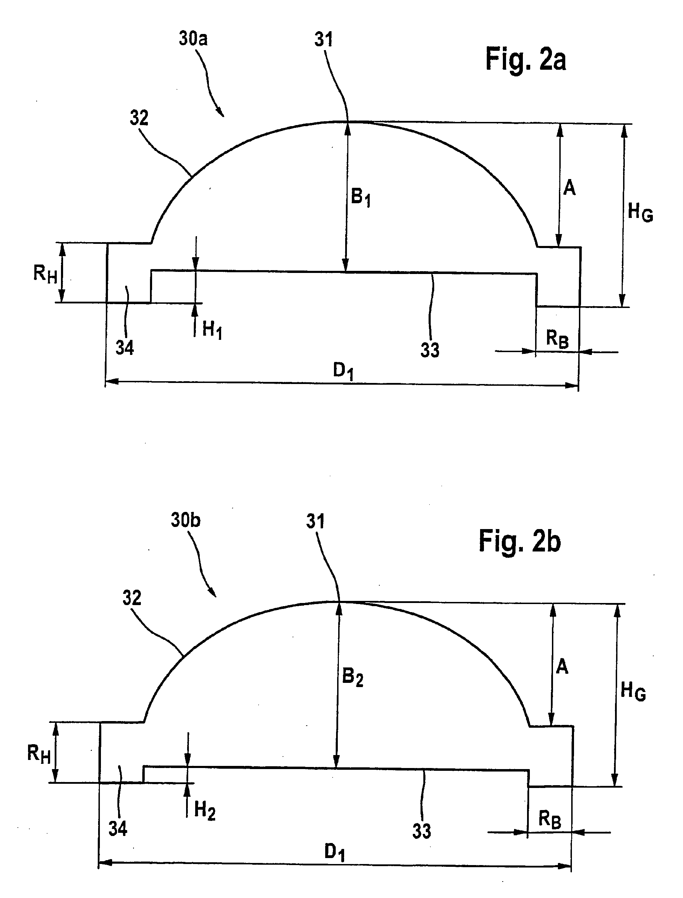

Wie sich dieses unterschiedliche Eintauchen des Stempels 20 bei den fertigen Linsen 30a,b bemerkbar macht, wird zusammen mit den Figuren 2a und 2b erläutert.

In der Figur 2a ist eine Linse 30a dargestellt, die einen Durchmesser D₁ aufweist. Der asphärische Teil 32 besitzt eine Höhe A und einen Abstand zur planen Linsenfläche 33 von B₁. Die Gesamthöhe beträgt H_{G}. Der Auflagerand 34 besitzt eine Höhe R_{H} und einen Abstand zur planen Linsenfläche 33 von H₁.

Wenn gegenüber der in Fig. 2a gezeigten Linse 30a mehr Material für die Herstellung der Linse zur Verfügung steht, wird eine Linse 30b gemäß der Figur 2b erzeugt, deren Abmessung A, H_{G}, R_{B} und R_{H} exakt den Abmessungen der Linse 30a in Fig. 2a entsprechen. Die Materialmengenschwankung macht sich lediglich in dem Abstand H₂ bemerkbar, wodurch auch der Abstand B₂ verändert wird. In der hier gezeigten Darstellung sind diese Maßveränderungen übertrieben dargestellt. Es ist zu sehen, dass die für die Einbaulage maßgebenden Abmessungen R_{B}, R_{H} und H_{G} unverändert bleiben und dass lediglich im optischen Abschnitt, d.h. im Bereich zwischen der planen Linsenfläche 33 und dem Scheitelpunkt 31 des asphärischen Linsenteils 32 eine Veränderung stattfindet.

### Beispiel für Tropfengewichtsschwankung:

+/-1 g ergibt bei einem Stempeldurchmesser D₂, von 70mm und einer Dichte des Glases von 2,5g/cm^3 eine Höhenänderung ΔH = H₁ - H₂ des Auflagerandes zur optischen Planfläche 33 von +/- 0,1 mm.

### Bezugszeichenliste

- 1: Blankpresswerkzeug
- 2: Unterteil
- 3: Asphärische Mulde
- 4: Schulter
- 5: Umfangsrand
- 6: Stirnfläche
- 10: Oberteil
- 11: Unterseite
- 20: Preßstempel
- 21: Unterseite des Pressstempels 20
- 30,30a,b: Linse
- 31: Scheitelpunkt des asphärischen Linsenteils
- 32: erste Linsenfläche
- 33: zweite Linsenfläche
- 34: Auflagerand
- D1: Linsendurchmesser
- D2: Stempeldurchmesser

## Patentansprüche

1. Verfahren zur Herstellung von Linsen (30,30a,b) für Kfz-Scheinwerfer mit einer ersten konvexen Linsenfläche (32) und einer zweiten Linsenfläche (33), wobei ein Schmelzetropfen bei einer Anfangs-Viskosität der Glasschmelze von 10⁴ bis 10⁶ dPas in eine konkave Form eingebracht und zusammen mit einem Stempel (20) ein beidseitiges Blankpressen durchgeführt wird, wobei ein Oberteil (10) in vertikaler Richtung beweglich angeordnet ist und der Stempel (20) das Oberteil (10) führt, und wobei der Stempel (20) in den Schmelzetropfen eintaucht und mittels des hierbei verdrängten Glasmaterials ein über den höchsten Punkt der zweiten Linsenfläche (33) vorstehender Auflagerand (34) mit vorgegebenen Abmessungen angeformt wird.

2. Verfahren nach Anspruch 1, **dadurch gekennzeichnet, dass** der Stempel (20) im Bereich zwischen dem Auflagerand (34) in den Schmelzetropfen eintaucht.

3. Verfahren nach Anspruch 1 oder 2, **dadurch gekennzeichnet, dass** Linsen (30,30a,b) mit einem Durchmesser von 50 - 80 mm beidseitig blankgepresst werden.

4. Werkzeug zum Blankpressen von Linsen für Kfz-Scheinwerfer mit einer ersten konvexen Linsenfläche (32) und einer zweiten Linsenfläche (33),
- mit einem Unterteil (2), das eine konkave Mulde (3) aufweist, die in eine horizontale Schulter (4) und einen vertikalen Umfangsrand (5) übergeht,
- mit einem Oberteil (10), das auf der Stirnseite des Unterteils (2) aufliegt und nach innen im Bereich der horizontalen Schulter (4) übersteht, und
- mit einem Stempel (20)
- wobei das Oberteil (10) in vertikaler Richtung beweglich angeordnet ist und der Stempel (20) das Oberteil (10) führt.

5. Werkzeug nach Anspruch 4, **dadurch gekennzeichnet, dass** der Stempel (20) ortsfest angeordnet ist und dass das Unterteil (2) in vertikaler Richtung bewegbar ist.

6. Werkzeug nach Anspruch 4 oder 5, **dadurch gekennzeichnet, dass** der Durchmesser des Stempels (20) ≤ dem Durchmesser der Mulde (3) ist.

7. Werkzeug nach einem der Ansprüche 4 bis 6, **dadurch gekennzeichnet, dass** der Stempel (20) eine plane Unterseite (21) aufweist.

## Claims

1. A process for manufacturing lenses (30, 30a, b) for motor vehicle headlights, said lenses having a first convex lens face (32) and a second lens face (33) , wherein a drop of melt (molten mass) is introduced into a concave mould at an initial viscosity of the glass melt of 10⁴ to 10⁶ dPas, and two-sided blank - (press) moulding is performed using a die (20), wherein an upper portion (10) is arranged to move in a vertical direction and the die (20) guides the upper portion (10), and wherein the die (20) dips into the drop of the melt and, by means of the displaced glass material, a resting rim or flange (34), which protrudes beyond the uppermost point of the second lens face (33) and has predetermined dimensions, is moulded.

2. A process as claimed in claim 1, **characterized in that** the die (20) dips into the drop of the melt in the area within the resting rim (34).

3. A process as claimed in claim 1 or 2, **characterized in that** the lenses (30, 30 a, b) having a diameter of 50 to 80 mm are blank - moulded on both sides.

4. A tool for blank - moulding lenses for motor vehicle headlights, said lenses having a first convex lens face (32) and a second lens face (33), said tool comprising
- a lower portion (2) which comprises a concave depression (3), which transits into a horizontal shoulder (4) and a vertical circumferential rim or flange (5),
- an upper portion (10) which rests on the front side of the lower portion (2) and inwardly protrudes in the area of the horizontal shoulder (4), and
- a die (20),
wherein the upper portion (10) is arranged to move in a vertical direction and the die (20) guides the upper portion (10).

5. A tool as claimed in claim 4, **characterized in that** the die (20) is arranged in a locally fixed position and that the lower portion (2) is arranged to move in a vertical direction

6. A tool as claimed in claim 4, **characterized in that** the diameter of the die (20) is one of smaller then and equal to the diameter of the depression (3).

7. A tool as claimed in any one of claims 4 to 6, **characterized in that** the die (20) comprises a planar bottom side (21).

## Revendications

1. Procédé de fabrication de lentilles (30,30a,b) pour projecteur de véhicule automobile, comprenant une première surface de lentille convexe (32) et une seconde surface de lentille (33), dans lequel une goutte en fusion est amenée dans un moule concave à une viscosité de départ pour la fusion du verre de 104 à 106 dPas et un pressage est réalisé conjointement des deux côtés à l'aide d'un piston (20), dans lequel une partie supérieure (10) est disposée mobile en direction verticale et le piston (20) guide la partie supérieure (10), et dans lequel le piston (20) plonge dans la goutte en fusion et, au moyen du matériau vitreux ainsi déplacé, un bord d'appui (34) dépassant du point le plus élevé de la seconde surface de lentille (33) est moulé à des dimensions prédéfinies.

2. Procédé selon la revendication 1, **caractérisé en ce que** le piston (20) plonge dans la goutte en fusion dans la zone entre le bord d'appui (34).

3. Procédé selon la revendication 1 ou 2, **caractérisé en ce que** des lentilles (30, 30a,b) ayant un diamètre de 50 à 80 mm sont pressées des deux côtés.

4. Outil de pressage de lentilles pour projecteur de véhicule automobile comprenant une première surface de lentille convexe (32) et une seconde surface de lentille (33), comportant :
- une partie inférieure (2), qui présente un creux concave (3) qui passe dans un épaulement horizontal (4) et un bord périphérique vertical (5),
- une partie supérieure (10), qui repose sur la face frontale de la partie inférieure (2) et dépasse vers l'intérieur au niveau de l'épaulement horizontal (4), et
- un piston (20)
dans lequel la partie supérieure (10) est disposée mobile en direction verticale et le piston (20) guide la partie supérieure (10).

5. Outil selon la revendication 4, **caractérisé en ce que** le piston (20) est disposé de manière fixe et **en ce que** la partie inférieure (2) est mobile en direction verticale.

6. Outil selon la revendication 4 ou 5, **caractérisé en ce que** le diamètre du piston (20) est ≤ au diamètre du creux (3).

7. Outil selon une des revendications 4 à 6, **caractérisé en ce que** le piston (20) présente une face inférieure plane (21).
